# EUROPÄISCHE PATENTANMELDUNG

(11) **EP 1 061 013 A1**
(43) Veröffentlichungstag der Anmeldung: **20.12.2000**
(21) Anmeldenummer: 00112319.9
(22) Anmeldetag: 08.06.2000
(51) Int. Cl.: B65G 1/127, A47B 49/00, A61J 7/00

(54) **Lagerregal**

(30) Priorität: 15.06.1999 DE 19927248
(71) Anmelder: HÄNEL & CO., CH-9450 Altstätten SG (CH)
(72) Erfinder: Hänel, Michael, 74177 Bad Friedrichshall (DE)
(74) Vertreter: Preissner, Nicolaus, Dipl.-Ing.

(57) **Zusammenfassung**

Die Erfindung betrifft ein Lagerregal (10) mit einem Gehäuse (11), in dem eine Vielzahl von Lagergutbehältern (12) aufgenommen ist. Diese sind mittels einer Transportvorrichtung (13) mindestens einer im Gehäuse (11) vorgesehenen Zugangsöffnung (14) zustellbar. An der Zugangsöffnung (14) ist eine Schließeinrichtung (17) vorgesehen, die mindestens zwei gegenüberliegend angeordnete Schließelemente (18a, 18b) aufweist, die in Horizontalrichtung verschiebbar und einzeln ansteuerbar sind. Hierdurch kann bei einfachem konstruktiven Aufwand ein Öffnungsfenster (16) in der Zugangsöffnung (14) gebildet werden.

## Beschreibung

Die Erfindung betrifft ein Lagerregal mit einem Gehäuse, in dem eine Vielzahl von Lagergutbehältern aufgenommen ist, die mittels einer Transportvorrichtung mindestens einer im Gehäuse vorgesehenen Zugangsöffnung zustellbar sind, und mit einer an der Zugangsöffnung angeordneten Schließeinrichtung, die ein Öffnungsfenster freigibt.

Ein derartiges Lagerregal ist aus der US 5,820,237 bekannt. Bei dem bekannten Lagerregal werden die Lagergutbehälter, in denen das Lagergut aufgenommen wird, durch die Transportvorrichtung im Gehäuse umlaufend gefördert. An der im Gehäuse vorgesehenen Zugangsöffnung sind eine Vielzahl von vertikal beweglichen Türen vorgesehen, die einzeln ansteuerbar sind. Hierdurch wird abhängig von der Zugangsberechtigung nur ein bestimmtes Öffnungsfenster der Zugangsöffnung freigegeben, wodurch ein unberechtigter Zugriff vermieden wird.

Ein ähnliches Lagerregal ist aus der US 5,836,662 bekannt, wobei die an der Zugangsöffnung vorgesehenen Türen um eine Horizontalachse wegklappbar sind.

Auf Grund der Vielzahl von separat betätigtbaren und ansteuerbaren Türen an der Zugangsöffnung weisen die vorstehend beschriebenen Lagerregale eine aufwendige Konstruktion auf, die mit hohen Herstellungskosten verbunden ist.

Der Erfindung liegt die Aufgabe zugrunde ein Lagerregal vorzuschlagen, bei dem eine Zugangskontrolle bei einfachem konstruktiven Aufbau möglich ist.

Zur Lösung dieser Aufgabe wird bei einem Lagerregal der eingangs genannten Art vorgeschlagen, daß die Schließeinrichtung mindestens zwei gegenüberliegend angeordnete Schließelemente aufweist, die in Horizontalrichtung verschiebbar und einzeln ansteuerbar sind.

Da die erfindungsgemäße Schließeinrichtung lediglich zwei horizontal verschiebliche Schließelemente aufweist, die entsprechend ihrer Ansteuerung ein bestimmtes Öffnungsfenster an der Zugangsöffnung des Lagerregals freigeben, wird ein einfacher konstruktiver Aufbau erzielt. Da die Schließelemente stufenlos in Horizontalrichtung verfahrbar sind, kann das Öffnungsfenster exakt festgelegt werden. Hierbei weist vorteilhaft jedes Schließelement einen Linearantrieb auf, der mit einem Positionssensor gekoppelt ist. Die erfindungsgemäße Schließeinrichtung kann sowohl bei Lagerregalen mit umlaufend transportiertem Lagergutbehältern als auch bei Lagerregalen mit anderweitigen Transportvorrichtungen für die Lagergutbehälter zum Einsatz kommen. An dem erfindungsgemäßen Lagerregal können mehrere Zugangsöffnungen, beispielsweise an der Vorder- und Rückseite des Gehäuses, vorgesehen sein.

Vorteilhafte Ausgestaltungen der Erfindung ergeben sich aus den Unteransprüchen.

Vorteilhaft ist jedem Schließelement eine separate Antriebseinheit zugeordnet. Nachdem nur eine geringe Anzahl von Schließelementen notwendig ist, ist auch die Anzahl der notwendigen Antriebseinheiten gering.

Vorteilhaft ist jedes Schließelement an einer an der Zugangsöffnung vorgesehenen Horizontal-Führung geführt.

Nach einer vorteilhaften Ausbildungsform ist das Schließelement als Rolladen ausgebildet. Hierbei können die Rolladenglieder beispielsweise aus Aluminium bestehen.

Vorteilhaft ist die Aufwickeleinrichtung des Rolladens an den Seitenenden der Zugangsöffnung angeordnet. Zweckmäßig wird hierbei die Aufwickeleinrichtung durch eine an der Zugangsöffnung vorgesehene Abdeckblende abgedeckt.

Bei einer anderen Ausführungsform ist das Schließelement als teleskopierbare Metallplatte ausgebildet.

Vorteilhaft weist das Schließelement zumindest bereichsweise ein Sichtfenster auf. Das Schließelement kann auch aus transparentem Material hergestellt sein.

In weiterer vorteilhafter Ausgestaltung weist die Schließeinrichtung mindestens eine in Vertikalrichtung verfahrbare Fronttür auf, die den mindestens zwei horizontal verfahrbaren Schließelementen vorgeschaltet ist. Hierdurch kann das Öffnungsfenster auch von der Höhe her eingeengt werden. Gleichzeitig dient die vorteilhaft aus massivem Stahlblech hergestellte Fronttür als Vandalismusschutz. Vorteilhaft ist der Fronttür ein Positionssensor zugeordnet.

In weiterer Ausgestaltung der Erfindung ist eine Steuereinrichtung vorgesehen, die die Antriebseinheit der mindestens zwei Schließelemente steuert.

Nachfolgend wird die Erfindung anhand von Ausführungsbeispielen näher erläutert, die in schematischer Weise in der Zeichnung dargestellt sind. Dabei zeigen:
- Figur 1: eine perspektivische Darstellung einer ersten erfindungsgemäßen Ausführungsform;
- Figur 2: die Schließeinrichtung der Ausführungsform gemäß Figur 1 in separater Darstellung;
- Figur 3: eine Schließeinrichtung einer weiteren Ausführungsform in separater Darstellung; und
- Figur 4: die Schließeinrichtung einer anderen erfindungsgemäßen Ausführungsform.

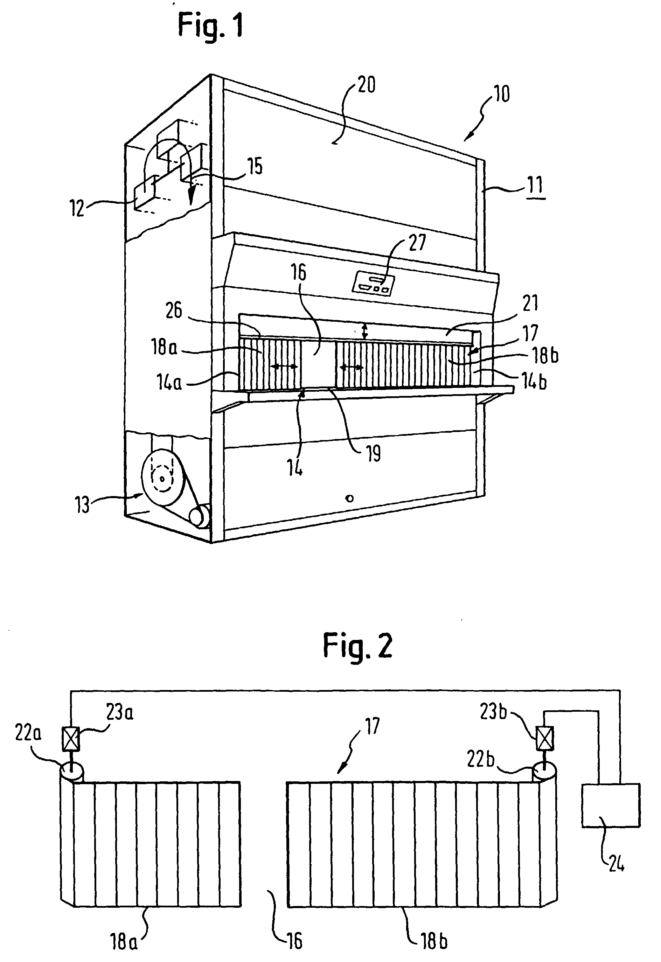

Figur 1 zeigt in perspektivischer Darstellung ein Lagerregal 10 mit einem rechteckförmigen Gehäuse 11. In dem Gehäuse 11 sind eine Vielzahl von Lagergutbehältern 12 zur Aufnahme von nicht näher dargestelltem Lagergut vorgesehen. Die Lagergutbehälter 12 können mittels einer Transportvorrichtung 13 umlaufend in Richtung des Pfeils 15 oder in Gegenrichtung transportiert werden. Die Lagergutbehälter sind mit Schlitzstanzungen ausgestattet und durch Teiler in Breite, Höhe und Tiefe beliebig durch den Verwender einteilbar.

An einer Frontseite 20 des Gehäuses 11 ist eine Zugangsöffnung 14 vorgesehen, an die jeder Lagergutbehälter 12 mittels der Transportvorrichtung 13 zustellbar ist. Wie aus der Darstellung hervorgeht, ist die Zugangsöffnung 14 rechteckförmig ausgebildet.

Der Zugangsöffnung 14 ist eine Schließeinrichtung 17 zugeordnet, die zwei gegenüberliegend angeordnete Schließelemente 18a, 18b aufweist, die jeweils in Horizontalrichtung verschiebbar sind. Die nähere Ausgestaltung der Schließeinrichtung und deren Antrieb wird im Zusammenhang mit Figur 2 beschrieben.

Mit der Schließeinrichtung 17 kann ein Öffnungsfenster 16 in der Zugangsöffnung 14 begrenzt werden, um einen unberechtigten Zugriff anderer Bereiche der Zugangsöffnung zu vermeiden. Hierbei verlaufen die Schließelemente 18a, 18b mit sehr geringem Abstand zu den Lagergutträgern 12.

Der Schließeinrichtung 17 ist eine Fronttür 21 vorgeschaltet, die in Vertikalrichtung verfahrbar ist. Die Fronttür 21 besteht aus einer durchgehenden Metallplatte, die die Zugangsöffnung in Schließstellung völlig abdeckt. Mit der Fronttür 21 kann das Öffnungsfenster 16 von oben begrenzt werden. Endseitig ist die Fronttür 21 mit einer Sicherheitsleiste 26 versehen, die als Einklemmschutz dient.

Die Schließelemente 18a, 18b sind bei dem dargestellten Ausführungsbeispiel als Rolläden ausgebildet, wobei die Aufwickeleinrichtungen 22a, 22b an den Seitenenden 14a, 14b der Zugangsöffnung 14 vorgesehen sind.

Figur 2 zeigt die Schließeinrichtung 17 von Figur 1 in einer schematischen Einzeldarstellung. Wie aus der Darstellung hervorgeht, sind die Schließelemente 18a, 18b jeweils als Rolladen ausgebildet, wobei jeder Aufwickeleinrichtung 22a, 22b eine separate Antriebseinheit 23a, 23b aufweist, der ein Positionssensor zugeordnet ist. Die Antriebseinheit 23a, 23b kann dabei als Kettenantrieb vorliegen, der mit dem Endglied des Rolladen-Schließelementes 18a, 18b gekoppelt ist. Die Schließelemente 18a, 18b weisen eine Vielzahl von Gliedern auf, die jeweils aus Aluminium hergestellt sind. Es können aber auch andere Materialien, beispielsweise Kunststoffmaterialien zum Einsatz kommen. Auch kann transparenter Kunststoff verwendet werden, um das eingelagerte Lagergut einsehen zu können.

Die Antriebseinheiten 23a, 23b der Aufwickeleinrichtung 22a, 22b sind elektrisch mit einer Steuereinrichtung 24 verbunden. Hierdurch kann an der Zugangsöffnung 14 stufenlos ein gewünschtes Öffnungsfenster 19 durch horizontale Zustellung der Schließelemente 18a, 18b angesteuert werden.

Nachfolgend soll die Funktionsweise der in Figur 1 dargestellten Schließeinrichtung 17 näher erläutert werden.

In der Ausgangsstellung befindet sich sowohl die Fronttür 21 als auch die Schließelemente 18a, 18b in ihrer Schließstellung. Somit ist die Frontöffnung 14 sowohl durch die Fronttür 21 als auch durch die Schließelemente 18a, 18b verschlossen.

Die Bedienperson weist sich an einer nicht näher dargestellten elektronischen Bedieneinheit 27 aus, beispielsweise durch einen Identifikationsnamen und ein Paßwort. Hierdurch wird der Bedienperson ein durch das Öffnungsfenster 19 bestimmter Zugriff auf ein bestimmtes Lagergut ermöglicht.

Nach Prüfung der Zugriffsberechtigung der Bedienperson wird zunächst die Fronttür 21 entriegelt. Danach werden die Schließelemente 18a, 18b über die zugeordneten Antriebseinheiten 23a, 23b angesteuert, um ein bestimmtes Öffnungsfenster 16 zu bilden. Der gewünschte Lagergutbehälter 12 wird mittels der Transportvorrichtung 13 an die Zugangsöffnung 14 verfahren. Nachfolgend wird die Fronttür 21 in die vorgesehene Höhe verfahren. Nunmehr kann die Bedienperson das Lagergut entnehmen.

Die Fronttür 21 schließt beispielsweise nach Quittierung durch die Bedienperson oder nachdem die Bedienperson einen bestimmten überwachten Bereich verlassen hat. Auch kann vorgesehen sein, daß die Fronttür 21 nach einer bestimmten Zeit schließt. Nach dem Entnahmevorgang werden die horizontal verfahrbaren Schließelemente 18a, 18b vorzugsweise in eine mittige Position verfahren.

Erst nach Schließen der Fronttür 21 kann ein neuer Zugriffzyklus eingeleitet werden.

Die Öffnungsfenster 16 werden an der elektronischen Bedieneinheit 27 manuell durch Eingabe der Positionen der Schließelemene 18a, 18b sowie der Fronttür 21 eingegeben.

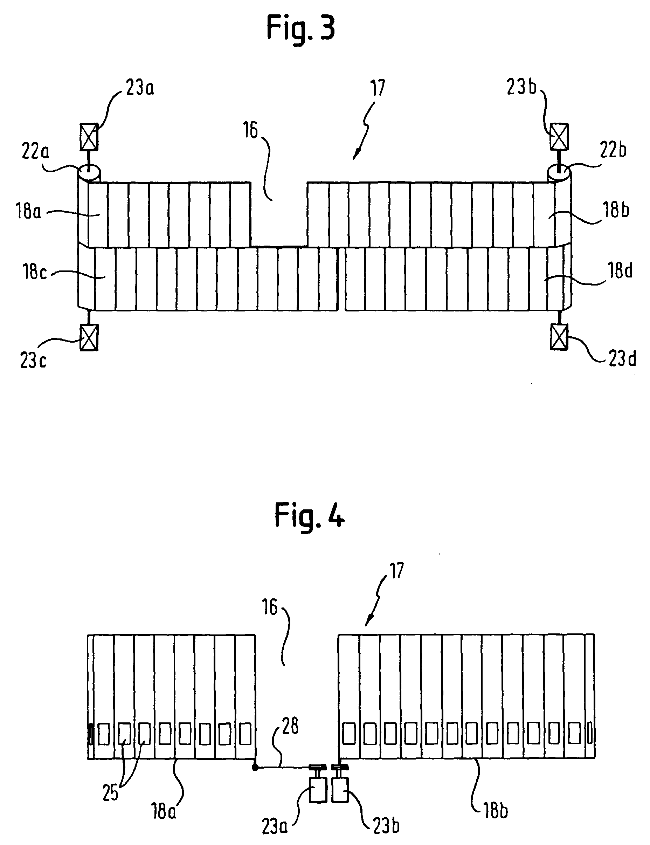

Figur 3 und 4 zeigen andere Varianten der Schließeinrichtung 17, zu deren Beschreibung die bereits eingeführten Bezugszeichen für gleiche oder funktionsgleiche Teile verwendet werden.

Die Schließeinrichtung 17 gemäß Figur 3 baut sich aus vier Schließelementen 18a, 18b, 18c, 18d auf, die jeweils als Rolladen ausgebildet sind. Jedes Schließelement 18a, 18b, 18c, 18d weist eine Aufwickeleinrichtung 22a, 22b auf, der eine Antriebseinheit 23a, 23b, 23c, 23d zugeordnet ist.

Wie aus der Darstellung hervorgeht, sind die Schließelemente 18a, 18b jeweils in Horizontalrichtung verschiebbar angeordnet, wobei die Schließelemente 18a, 18b über den Schließelementen 18c, 18d positioniert sind. Hierdurch kann ein Öffnungsfenster 19 gebildet werden, das sowohl in Horizontalrichtung als auch in Vertikalrichtung beschränkt ist.

Figur 4 zeigt eine weitere Variante einer Schließeinrichtung 17, bei der die Schließelemente 18a, 18b als teleskopierbare Metallplatten ausgebildet sind. Die Ausziehbewegung der Schließelemente 18a, 18b wird durch Antriebseinheiten 23a, 23b erzielt, die jeweils einem Schließelement 18a, 18b zugeordnet sind. Hierbei sind die Antriebseinrichtungen 23a, 23b über Förderseile 28 mit dem Endbereich der Schließelemente 18a, 18b verbunden. In den teleskopierbaren Metallplatten ist ein Sichtfenster 25 angeordnet.

Allen Ausführungsformen der erfindungsgemäßen Schließeinrichtung 17 ist gemeinsam, daß durch die geringe Anzahl an Schließelementen 18a, 18b, 18c, 18d der konstruktive und apparative Aufwand reduziert ist.

## Patentansprüche

1. Lagerregal (10) mit einem Gehäuse (11), in dem eine Vielzahl von Lagergutbehältern (12) aufgenommen ist, die mittels einer Transportvorrichtung (13) mindestens einer im Gehäuse (11) vorgesehenen Zugangsöffnung (14) zustellbar sind, und mit einer an der Zugangsöffnung (14) angeordneten Schließeinrichtung (17), die ein Öffnungsfenster (16) freigibt, dadurch gekennzeichnet, daß die Schließeinrichtung (17) mindestens zwei gegenüberliegend angeordnete Schließelemente (18a, 18b, 18c, 18d) aufweist, die in Horizontalrichtung verschiebbar und einzeln ansteuerbar sind.

2. Lagerregal nach Anspruch 1, dadurch gekennzeichnet, daß jedem Schließelement (18a, 18b, 18c, 18d) eine separate Antriebseinheit (23a, 23b, 23c, 23d) zugeordnet ist.

3. Lagerregal nach Anspruch 1 oder 2, dadurch gekennzeichnet, daß jedes Schließelement (18a, 18b, 18c, 18d) an einer an der Zugangsöffnung (14) vorgesehenen Horizontal-Führung (19) geführt ist.

4. Lagerregal nach einem der Ansprüche 1 bis 3, dadurch gekennzeichnet, daß das Schließelement (18a, 18b, 18c, 18d) als Rolladen ausgebildet ist.

5. Lagerregal nach Anspruch 4, dadurch gekennzeichnet, daß eine Aufwickeleinrichtung (22a, 22b) des Rolladen-Schließelements (18a, 18b) an den Seitenenden (14a, 14b) der Zugangsöffnung (14) angeordnet ist.

6. Lagerregal nach einem der Ansprüche 1 bis 5, dadurch gekennzeichnet, daß das Schließelement (18a, 18b) als teleskopierbare Metallplatte ausgebildet ist.

7. Lagerregal nach einem der Ansprüche 1 bis 6, dadurch gekennzeichnet, daß das Schließelement (18a, 18b, 18c, 18d) zumindest bereichsweise ein Sichtfenster (25) aufweist.

8. Lagerregal nach einem der Ansprüche 1 bis 7, dadurch gekennzeichnet, daß die Schließeinrichtung (17) mindestens eine in Vertikalrichtung verfahrbare Fronttür (21) aufweist, die den mindestens zwei horizontal verfahrbaren Schließelementen (18a, 18b, 18c, 18d) vorgeschaltet ist.

9. Lagerregal nach einem der Ansprüche 1 bis 8, dadurch gekennzeichnet, daß eine Steuereinrichtung (24) vorgesehen, die die Antriebseinheit (23a, 23b) der mindestens zwei Schließelemente (18a, 18b) steuert.
